# EUROPÄISCHE PATENTSCHRIFT

(11) **EP 3 024 990 B1**
(45) Veröffentlichungstag und Bekanntmachung des Hinweises auf die Patenterteilung: **16.04.2025**
(21) Anmeldenummer: 14739452.2
(22) Anmeldetag: 16.07.2014
(51) Int. Cl.: E03F 5/04

(54) **ABLAUFEINRICHTUNG**
OUTLET DEVICE
BOUCHE D'EGOUT

(30) Priorität: 23.07.2013 DE 102013107840
(43) Veröffentlichungstag der Anmeldung: 01.06.2016
(73) Patentinhaber: ACO Ahlmann SE & Co. KG, 24782 Büdelsdorf (DE)
(72) Erfinder: NEMEC, Ivo, 592 12 Nizkov (CZ)
(74) Vertreter: Meissner Bolte Partnerschaft mbB
(86) Internationale Anmeldenummer: PCT/EP2014/065238
(87) Internationale Veröffentlichungsnummer: WO 2015/010989

(56) Entgegenhaltungen:
- DE-U- 1 979 590
- DE-U1- 202010 008 258
- FR-A1- 2 296 113
- SE-B- 306 062
- US-A- 2 898 129
- US-A- 4 462 123
- US-A- 4 562 602
- US-A1- 2007 177 942

## Beschreibung

Die Erfindung betrifft eine Ablaufeinrichtung gemäß Patentanspruch 1.

Eine Vielzahl von Ablaufeinrichtungen zum Abführen von Abwasser ist bekannt. Ein Problem bei bisher bekannten Ablaufeinrichtungen ist, dass Abwasser sich auf verschiedenen Flächen der Ablaufeinrichtungen, insbesondere auf einer Abstützfläche zum Abstützen eines Abdeckungselements, ansammelt bzw. verbleibt. Das länger auf den Flächen verweilende Abwasser verdunstet anstatt abzufließen. Hierdurch wird die Luftfeuchtigkeit erhöht und das verdunstete Abwasser hinterlässt Schmutzreste auf den Flächen der Ablaufeinrichtung. Dies führt zu erhöhtem Reinigungsaufwand und zu erhöhten Reinigungskosten. Zudem vermehren sich Bakterien im auf den Flächen verweilenden Abwasser sehr schnell. Dies gefährdet die Gesundheit von Menschen, die in Kontakt mit dem sich auf den Flächen verweilenden Abwasser gelangen bzw. die das nach einiger Zeit verdunstete Abwasser einatmen.

Aus der SE 306 062 B ist eine Ablaufeinrichtung zu entnehmen, die eine abgestufte Wandung aufweist. Weiterhin ist auf der Ablaufeinrichtung ein Gitter angeordnet, das bündig mit einer Oberkante der Wandung abschließt.

Die US 2 898 129 A beschreibt eine Ablaufeinrichtung mit einem Flansch, an dem eine wasserdichte Membran oder ein Anschluss mittels eines Klemmrings befestigt ist.

Dokument FR 2 296 113 A beschreibt ein wannenartiger Siphon, insbesondere einen Entwässerungsschacht mit einem Einlass, einem Auslasskrümmer und einem Rückschlagventil.

Aus der US 4,462,123 ist ein Bodenablauf zu entnehmen, der dazu eingerichtet ist, Gegenstände, insbesondere angeschwemmten Müll, zurückzuhalten und lediglich das (Ab-)Wasser ablaufen zu lassen.

Die DE 1 979 590 U beschreibt ein Bodensiphon, bestehend aus einem mit einem Ablaufrohr versehenen Topf und einem unterhalb der Unterkante des Ablaufrohres in der Nähe des Topfbodens mündenden vertikalen Einsatzstutzen. Aus der US 4,562,602 ist ein breiter Bodenablauf zu entnehmen, der an ein schmales Abflussrohr angepasst ist und einen breiten Ablaufkörper beinhaltet mit einem oberen Flansch, der sich radial nach außen von dessen oberem Ende erstreckt und bündig mit einer Bodenfläche angeordnet ist.

Die US 2007/0177942 A1 offenbart einen Bodenablauf mit einer Ablaufwanne und einem in die Ablaufwanne eingesetzten Rost. An die Ablaufwanne ist ein Rohr angeschlossen, um Oberflächenwasser abzuführen. Zur Auflage des Rostes weist die Ablaufwanne eine horizontale Leiste mit nach oben ausgerichteten Stützelementen auf.

Der Erfindung liegt die Aufgabe zu Grunde, eine Ablaufeinrichtung aufzuzeigen, bei der technisch einfach verhindert wird, dass Abwasser auf (Ober-)Flächen der Ablaufeinrichtung verbleibt bzw. länger verweilt.

Diese Aufgabe wird durch eine Ablaufeinrichtung nach Anspruch 1 gelöst. Insbesondere wird die Aufgabe durch eine Ablaufeinrichtung zum Abführen von Abwasser gelöst, umfassend eine Oberrandfläche, die eine Außenumfassung der Ablaufeinrichtung bildet, eine Abstützfläche zum Abstützen eines Abdeckungselements derart, dass dessen begehbare Oberfläche im Wesentlichen bündig mit der Oberrandfläche verläuft, und einen Boden zum Auffangen und zum Weiterleiten von Abwasser in eine Öffnung eines Ablaufstutzens im Boden der Ablaufeinrichtung, wobei die Oberrandfläche, die Abstützfläche und der Boden über im Gebrauch im Wesentlichen vertikal verlaufende Verbindungswände miteinander verbunden sind.

Erfindungsgemäß ist zumindest ein Teil der Abstützfläche derart in Richtung des Bodens abfallend ausgebildet, dass im Gebrauch Abwasser, das auf die Abstützfläche gelangt, in Richtung des Bodens fließt. Ferner weist der Boden mehrere Bodenelemente auf, die in einem Winkel einander zu geneigt und in Richtung der Öffnung des Ablaufstutzens abfallend ausgebildet sind, wobei die Bodenelemente über Verbindungskanten miteinander verbunden sind. Ein Vorteil hiervon ist, dass Abwasser, das auf die verschiedenen Bodenelemente gelangt, sicher zu der Öffnung des Ablaufstutzens geführt wird. Des Weiteren sind die Verbindungskanten zwischen den Bodenelementen des Bodens von oben betrachtet jeweils senkrecht zueinander ausgerichtet.

Ein wesentlicher Punkt der Erfindung besteht darin, dass zumindest ein Teil der Abstützfläche zum Abstützen des Abdeckungselements in Richtung des Bodens abfallend ausgebildet ist. Dies heißt, dass zumindest ein Teil der Abstützfläche im Gebrauch in Bezug auf die Horizontale derart geneigt ist, dass Wasser in Richtung des Bodens und somit in Richtung der Öffnung des Ablaufstutzens abfließt bzw. abgeleitet wird. Ein Vorteil hiervon ist, dass das Abwasser technisch einfach zuverlässig und schnell von der Abstützfläche der Ablaufeinrichtung abfließt. Hierdurch wird verhindert, dass Abwasser sich auf der Abstützfläche ansammelt bzw. verbleibt und verdunstet, wodurch sich Rückstände des verdunsteten Abwassers auf der Abstützfläche ansammeln. Hierdurch sinken der Reinigungsaufwand und die Reinigungskosten. Zudem wird die Vermehrung von Bakterien, die sich im (warmen) Abwasser schnell vermehren, auf der Ablaufeinrichtung verhindert bzw. unterdrückt, da kein Abwasser auf der Abstützfläche (länger) verbleibt.

In einer Ausführungsform ist die Oberrandfläche zumindest teilweise derart in Richtung des Bodens abfallend ausgebildet, dass im Gebrauch Abwasser, das auf die Oberrandfläche gelangt, in Richtung des Bodens abfließt. Hierdurch wird das Ansammeln bzw. Verbleiben von Abwasser auf der Oberrandfläche weitergehend verhindert. Zudem wird das Entstehen bzw. Ansammeln von Rückständen von verdunstetem Wasser auf der Oberrandfläche technisch einfach im Wesentlichen verhindert. Hierdurch wird das Sauberhalten bzw. die Reinigung der Ablaufeinrichtung wesentlich erleichtert. Dies führt zu einem geringeren Reinigungsaufwand und zu geringeren Reinigungskosten. Darüber hinaus sinkt das Rutschrisiko, wenn ein Mensch die Ablaufeinrichtung bzw. die Oberrandfläche betritt, da die Reibung durch das sichere Ableiten des Abwassers von der Oberrandfläche erhöht wird. Es verbleibt kein Abwasser auf der Oberrandfläche, das als Rutschfilm dienen könnte.

In einer weiteren Ausführungsform ist zumindest ein Teil der die Abstützfläche begrenzenden Außenkanten, insbesondere alle die Abstützfläche begrenzenden Außenkanten, abgerundet ausgebildet. Hierdurch wird das Abwasser noch sicherer abgeführt. Darüber hinaus wird das Verbleiben von Abwasser auf Flächen der Ablaufeinrichtung noch stärker verhindert. Hierdurch können sich noch schwerer Rückstände von verdunstetem Abwasser auf der Ablaufeinrichtung bzw. Flächen der Ablaufeinrichtung bilden bzw. ansammeln. Darüber hinaus wird die Reinigung der Abstützfläche erleichtert.

Zumindest ein Teil der den Boden begrenzenden Außenkanten, insbesondere alle den Boden begrenzenden Außenkanten, können abgerundet ausgebildet sein. Hierdurch wird ein Ansammeln von Abwasser bzw. Verbleiben von Abwasser auf Flächen der Ablaufeinrichtung noch stärker verhindert. Zudem wird die Reinigung des Bodens erleichtert.

Erfindungsgemäss ist zumindest ein Teil des Bodens in Richtung der Öffnung des Ablaufstutzens abfallend ausgebildet. Hierdurch wird das Abfließen des Wassers vom Boden in die Öffnung des Ablaufstutzens unterstützt und sicher gewährleistet. Dadurch wird das Verbleiben von Abwasser auf Teilen des Bodens sicherer verhindert. Somit können Rückstände von verdunstetem Wasser schwerer auf Teilen des Bodens zurückbleiben. Dies senkt den Reinigungsaufwand und senkt auch die Reinigungskosten.

Alle Flächen der Ablaufeinrichtung, die zur Kontaktierung des Abwassers vorgesehen sind, können in Richtung der Öffnung des Ablaufstutzens abfallend ausgebildet sein. Ein Vorteil hiervon ist, dass technisch einfach eine Ablaufeinrichtung ausgebildet wird, bei der das Ansammeln und Verbleiben von Abwasser auf irgendeiner Fläche der Ablaufeinrichtung im Wesentlichen verhindert wird. Hierdurch können sich keine Schmutzreste von verdunstetem Abwasser auf Flächen der Ablaufeinrichtung sammeln bzw. bilden. Hierdurch sinken der Reinigungsaufwand sowie die Reinigungskosten erheblich. Zudem wird die Reinigung der Flächen erleichtert. Darüber hinaus wird die Vermehrung von Bakterien unterdrückt.

In einer weiteren Ausführungsform weist der Boden Verstärkungsbereiche auf, in denen der Boden eine größere Dicke aufweist im Vergleich zu den Bereichen des Bodens außerhalb der Verstärkungsbereiche. Ein Vorteil hiervon ist, dass der Boden der Ablaufeinrichtung besonders stabil ausgebildet ist. Somit verformt sich der Boden auch bei größeren Mengen von Abwasser nicht. Hierdurch wird die Funktionalität des Bodens, insbesondere die Ausrichtung des Bodens im Gebrauch im Vergleich zur Horizontalen, auch bei größeren Mengen von Abwasser gewährleistet.

Die Längsrichtungen der Verstärkungsbereiche können im Wesentlichen in Richtung der Öffnung des Ablaufstutzens verlaufen. Ein Vorteil hiervon ist, dass das Abwasser durch die Verstärkungsbereiche noch gezielter in Richtung der Öffnungen des Ablaufstutzens geführt wird. Hierdurch wird das Ansammeln von Abwasser bzw. Verbleiben von Abwasser auf Teilen der Abflusseinrichtung noch stärker verhindert.

Erfindungsgemäß sind die Bodenelemente des Bodens in Richtung der Öffnung des Ablaufstutzens abfallend ausgebildet. Hierdurch wird sichergestellt, dass auf keinem der Bodenelemente wesentliche Mengen von Abwasser verbleiben können, so dass keine Schmutzreste auf den Bodenelementen durch verdunstetes Abwasser entstehen.

Die Ablaufeinrichtung kann spiegelsymmetrisch bezüglich einer Spiegelebene ausgebildet sein, die durch den Mittelpunkt der Öffnung des Ablaufstutzens und senkrecht zu den Verbindungswänden verläuft. Hierdurch wird die Herstellung der Ablaufeinrichtung technisch vereinfacht. Hierdurch sinken die Herstellungskosten der Ablaufeinrichtung. Zudem wird der Einbau der Ablaufeinrichtung in den Boden vereinfacht, da die Ausrichtung der Ablaufeinrichtung beliebig ist, d.h. die beiden Längsenden der Ablaufeinrichtung beliebig miteinander vertauscht werden können.

In einer weiteren Ausführungsform ist zumindest ein Teil der Ecken des Bodens abgerundet ausgebildet. Ein Vorteil hiervon ist, dass das Abwasser noch zuverlässiger abgeleitet wird. Zudem wird hierdurch die Reinigung der Ecken des Bodens erleichtert.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine perspektivische Röntgenansicht einer ersten Ausführungsform der erfindungsgemäßen Ablaufeinrichtung;
- Fig. 2: eine Detailansicht des Bereichs II aus Fig. 1;
- Fig. 3: eine perspektivische Röntgenansicht einer weiteren Ausführungsform der erfindungsgemäßen Ablaufeinrichtung;
- Fig. 4: eine Röntgenaufsicht auf die Ablaufeinrichtung aus Fig. 3; und
- Fig. 5: eine seitliche Röntgenansicht der Ablaufeinrichtung aus Fig. 3 bzw. Fig. 4.

Bei der nachfolgenden Beschreibung werden für gleiche und gleich wirkende Teile dieselben Bezugsziffern verwendet.

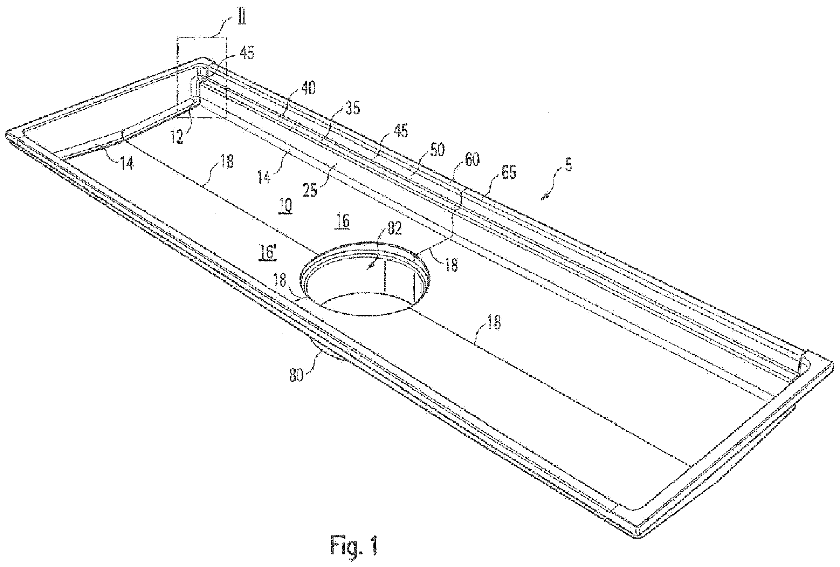

Fig. 1 zeigt eine perspektivische Röntgenansicht einer ersten Ausführungsform der erfindungsgemäßen Ablaufeinrichtung 5. Die Ablaufeinrichtung 5 ist beispielsweise eine Ablaufrinne, die in einen Boden, beispielsweise einen Fliesenboden, eingebaut wird. Vorstellbar ist jedoch auch, dass die Ablaufeinrichtung 5 eine Duschrinne ist. Die Ablaufeinrichtung 5 kann auch ein Kanalelement sein.

Die Ablaufeinrichtung 5 umfasst einen Boden 10. Der Boden 10 sammelt das Abwasser und leitet das Abwasser in eine Öffnung 82 eines Ablaufstutzens 80. Der Ablaufstutzen 80 dient zum Anschließen der Ablaufeinrichtung 5 an ein Abwasserrohr bzw. die Kanalisation.

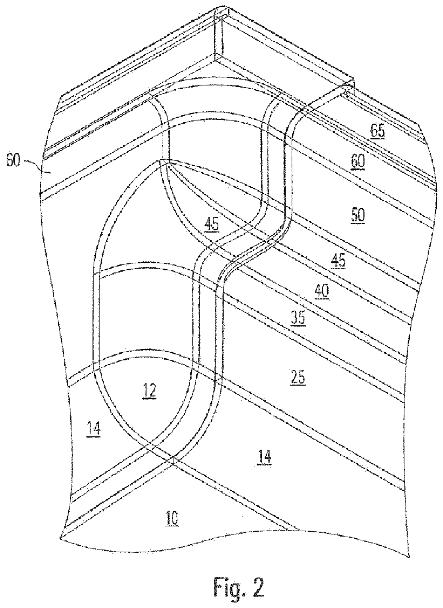

Fig. 2 zeigt eine Detailansicht des Bereichs II aus Fig. 1. Der Boden 10 ist durch Außenkanten 14 und Ecken 12 begrenzt. Die Außenkanten 14 sind abgerundet. Die Ecken 12 sind ebenfalls abgerundet ausgebildet.

Die Ablaufeinrichtung 5 umfasst an den beiden gegenüberliegenden Längsseiten (in Fig. 1 rechts oben bzw. links unten) jeweils eine Abstützfläche 40. An den Kurz- bzw. Querseiten (in Fig. 1 links oben bzw. rechts unten) befindet sich keine Abstützfläche 40. Vorstellbar ist jedoch auch, dass auch an den Kurzseiten eine Abstützfläche vorgesehen ist.

Der Boden 10 geht (an den beiden Längsseiten der Ablaufeinrichtung 5) über abgerundete Außenkanten 14 in eine Verbindungswand 25 und anschließend über Außenkanten 35, die auch abgerundet ausgebildet sind, in eine Abschlussfläche 40 über. Die Verbindungswand 25 ist im Gebrauch derart angeordnet, dass diese im Wesentlichen vertikal verläuft. Der Boden 10 geht somit fließend in die Kanten 14, anschließend in die Verbindungswand 25 und über die Außenkanten 35 in die Abstützfläche 40 über. Die Abstützfläche 40 fällt in Richtung des Bodens 10 bzw. der Öffnung 82 des Ablaufstutzens 80 ab, d.h. die Abstützfläche 40 ist gegenüber einer Horizontalen (leicht) geneigt ausgebildet. Hierdurch fließt das Abwasser sicher und schnell von der Abstützfläche 40 ab. Es sammelt sich nicht auf der Abstützfläche 40 und es verbleibt auch im Wesentlichen kein Abwasser auf der Abstützfläche 40.

Die Abstützfläche 40 geht auf der der Verbindungswand 25 abgewandten Seite fließend in obere Außenkanten 45 der Abstützfläche 40 über. Die obere Außenkante 45 der Abstützfläche 40 geht wiederum in eine Verbindungswand 50 zwischen Abstützfläche 40 und einer Oberrandfläche 65 fließend über. Anschließend geht die Verbindungswand 50 in die abgerundete Außenkante 60 der Oberrandfläche 65 fließend über. Schließlich geht die abgerundete Außenkante 60 in die Oberrandfläche 65 fließend über. Dies bedeutet, dass die Außenkanten 45 der Abstützfläche 40 und die Außenkante 60 der Oberrandflächen 65 abgerundet ausgebildet sind. Die Verbindungswand 50 zwischen Abstützfläche 40 und Oberrandfläche 65 ist im Gebrauch im Wesentlichen vertikal ausgerichtet. Die Oberrandfläche 65 bildet eine Außenumfassung der Ablaufeinrichtung 5.

Die Abstützfläche 40 dient zum Abstützen eines Abdeckungselements (nicht gezeigt). Das Abdeckungselement deckt den Boden 10 der Ablaufeinrichtung 5 ab. Das Abdeckungselement weist eine begehbare Oberfläche auf, die im Gebrauch im Wesentlichen bündig mit der Oberrandfläche 65 abschließt. Im Gebrauch verläuft die Oberfläche des Abdeckungselements im Wesentlichen horizontal. Das Abdeckungselement kann insbesondere ein Abdeckgitter bzw. ein Abdeckrost sein. Das Abwasser gelangt durch Schlitze in dem Abdeckungselement durch das Abdeckungselement in das Innere der Ablaufeinrichtung 5 bzw. zu dem Boden 10.

Die Oberrandfläche 65 dient als Sichtfläche. Dies bedeutet, dass nach Einsetzen des Abdeckungselements und Einbauen der Ablaufeinrichtung 5 in den Boden im Normalfall lediglich die Oberrandfläche 65 und die Oberfläche des Abdeckungselements direkt sichtbar sind. Natürlich sind weitere Teile der Ablaufeinrichtung 5 durch die Schlitze des Abdeckungselements sichtbar.

Auch die Ecken 12 des Bodens 10 sind abgerundet ausgebildet. Somit besteht zwischen den Außenkanten 14 des Bodens 10 entlang der Längsseite der Ablaufeinrichtung 5 und den Außenkanten 14 des Bodens entlang der Kurz- bzw. Querseite der Ablaufeinrichtung 5 in den Eckbereichen ein fließender Übergang. Auch die Kante 45 der Abstützfläche 40 im Eckbereich ist abgerundet ausgebildet.

Vorstellbar ist auch, dass jeweils nur ein Teil der (Außen-)Kanten und/oder Ecken abgerundet ausgebildet ist.

In Fig. 1 und Fig. 2 ist die gesamte Abstützfläche 40 auf den beiden gegenüberliegenden Längsseiten der Ablaufeinrichtung 5 in Richtung des Bodens 10 abfallend ausgebildet. Die gesamte Oberrandfläche 65 (d.h. an beiden Längsseiten und an beiden Kurz- bzw. Querseiten der Ablaufeinrichtung 5) ist in Fig. 1 und in Fig. 2 in Richtung des Bodens 10 abfallend ausgebildet. Auch vorstellbar ist, dass jeweils nur ein Teil der Oberrandfläche 65 und/oder der Abstützfläche 40 in Richtung des Bodens 10 bzw. der Öffnung 82 des Ablaufstutzens 80 abfallend ausgebildet ist; beispielsweise nur die Oberrandfläche 65 an den beiden Längsseiten oder an den beiden Kurz- bzw. Querseiten. In der gezeigten Ausführungsform in Fig. 1 und Fig. 2 ist die gesamte Oberrandfläche 65, die gesamte Abstützfläche 40 sowie alle Ecken 12 des Bodens 10, alle Kanten 14 des Bodens 10, alle (oberen und unteren) Kanten 35, 45 der Abstützfläche 40 und die gesamte (umlaufende) Kante 60 der Oberrandfläche 65 abgerundet bzw. in Richtung des Bodens 10 bzw. in Richtung der Öffnung 82 des Ablaufstutzens 80 abfallend ausgebildet. Dies gilt für die entsprechenden Elemente an beiden Längsseiten der Ablaufeinrichtung 5. Vorstellbar ist auch, dass ein oder einige der genannten Elemente und/oder jeweils nur Teile bzw. Bereiche der genannten Elemente abgerundet bzw. in Richtung des Bodens 10 abfallend ausgebildet sind.

Der Boden 10 weist mehrere Bodenelemente 16, 16' auf. Die Bodenelemente 16, 16' sind über Verbindungskanten 18 miteinander verbunden. Die Bodenelemente 16, 16' sind in einem Winkel zueinander geneigt. Dies bedeutet, dass die Bodenelemente 16, 16' einen spitzen Winkel zueinander und im Gebrauch zur Horizontalen bilden. Die Bodenelemente 16, 16' sind darüber hinaus abfallend in Richtung der Öffnung 82 des Ablaufstutzens 80 geneigt ausgebildet. Der Boden 10 umfasst in der in Fig. 1 gezeigten Ausführungsform vier im Wesentlichen rechteckige gleich große Bodenelemente 16, 16'. Auch andere Formen der Bodenelemente, wie z.B. dreieckig, fünfeckig, sechseckig usw. sind vorstellbar.

Der Boden 10 kann (insbesondere linienförmige) Verstärkungsbereiche (nicht gezeigt) aufweisen. In den Verstärkungsbereichen weist der Boden eine größere Dicke (gemessen im Gebrauch in vertikaler Richtung) auf als die Bereiche des Bodens 10 außerhalb der Verstärkungsbereiche. Die Längsrichtungen (größte Ausdehnungen) dieser (linienförmigen) Verstärkungsbereiche können im Wesentlichen in Richtung der Öffnung 82 des Ablaufstutzens 80 verlaufen.

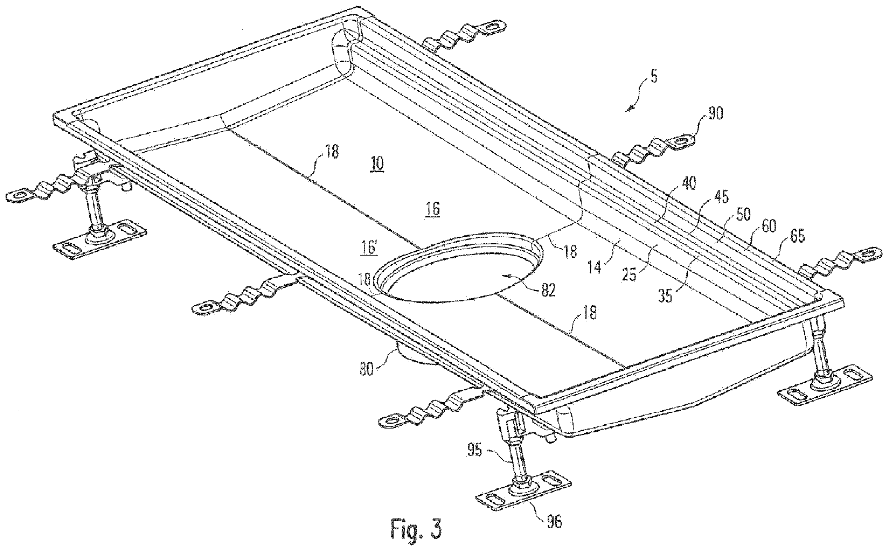

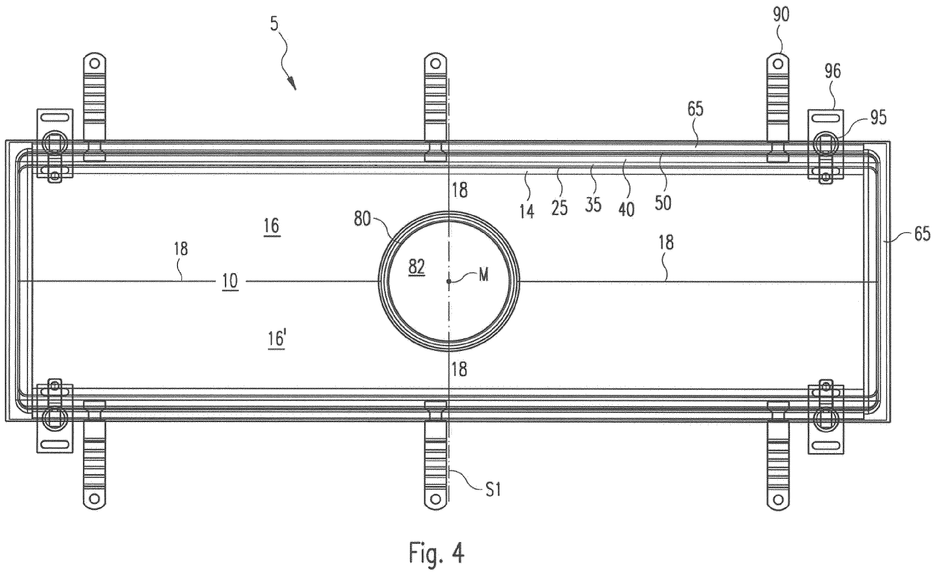

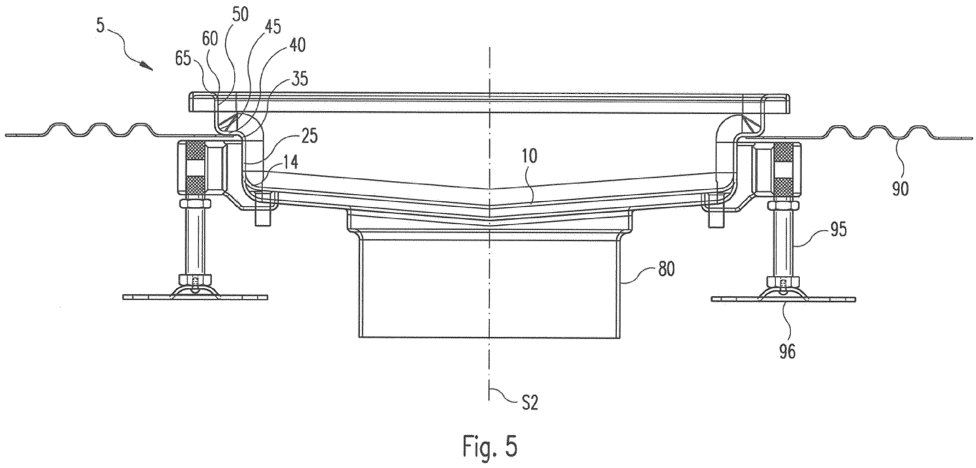

Fig. 3 zeigt eine perspektivische Röntgenansicht einer weiteren Ausführungsform der erfindungsgemäßen Ablaufeinrichtung 5. Die in Fig. 3 gezeigte Ausführungsform unterscheidet sich von der ersten Ausführungsform der Fig. 1 und Fig. 2 nur darin, dass die Ablaufeinrichtung 5 zusätzlich Befestigungselemente 90, Höhenverstellelemente 95 und Füße 96 der Höhenverstellelemente 95 aufweist. Fig. 4 zeigt eine Röntgenansicht von oben (im Gebrauch) der Ablaufeinrichtung aus Fig. 3. Fig. 5 zeigt eine seitliche Röntgenansicht der Ablaufeinrichtung 5 aus Fig. 3 bzw. 4.

Die Ablaufeinrichtung 5 aus den Fig. 3 bis 5 weist Befestigungselemente 90 auf. Diese Befestigungselemente 90 erstrecken sich im Wesentlichen senkrecht zu den Verbindungswänden 25, 50 nach außen, d.h. weg von dem Ablaufstutzen 80. Die Befestigungselemente 90 dienen zur Befestigung der Ablaufeinrichtung 5 in bzw. am Boden, in den die Ablaufeinrichtung 5 eingebaut wird. Die Befestigung kann beispielsweise mittels Verschrauben, Vernieten, Verkleben oder mittels anderer Befestigungsarten erfolgen. Die Ablaufeinrichtung 5 weist in Fig. 4 sechs zueinander gleichmäßig beabstandete Befestigungselemente 90 auf, drei auf jeder Längsseite der Ablaufeinrichtung 5. Vorstellbar sind andere Anordnung der Befestigungselemente, sowie lediglich zwei, drei, vier oder fünf Befestigungselemente. Auch eine größere Anzahl als sechs Befestigungselemente, z.B. sieben oder acht Befestigungselemente sind vorstellbar.

Die Ablaufeinrichtung 5 weist an bzw. nahe an ihren beiden gegenüberliegenden Längsenden (in Fig. 4 rechts und links) jeweils angeordnet an den beiden gegenüberliegenden Längsseiten (in Fig. 4 oben und unten) erfindungsgemäß insgesamt vier Höhenverstellelemente 95 auf. Diese Höhenverstellelemente 95 können beispielsweise Schrauben bzw. Gewindebolzen mit einer Mutter sein. Die Höhenverstellelemente 95 stehen auf Füßen 96 bzw. sind mit Füßen 96 verbunden. Die Höhenverstellelemente 95 dienen zur Höhenverstellung des jeweiligen Bereichs der Ablaufeinrichtung 5. Sie dienen zur Ausrichtung der Ablaufeinrichtung 5 in Bezug auf den Boden bzw. in Bezug auf die Horizontale. Die Höhenverstellelemente 95 werden derart verstellt, dass die Öffnung 82 des Ablaufstutzens 80 am tiefsten Punkt der Ablaufeinrichtung 5 liegt. Zudem wird die Ablaufeinrichtung 5 derart in den Boden eingebaut bzw. ausgerichtet, dass die Verbindungswände 25, 50 im Wesentlichen vertikal verlaufen. Darüber hinaus wird beim Einbau darauf geachtet, dass der Winkel der Abstützfläche 40 zur Horizontalen auf den beiden gegenüberliegenden Längsseiten (in Fig. 3 links und rechts bzw. in Fig. 4 oben und unten) sowie der Winkel der Oberrandfläche 65 zur Horizontalen an allen Seiten der Ablaufeinrichtung 5 im Wesentlichen gleich groß sind.

Die Öffnung 82 des Ablaufstutzens 80 ist rund ausgebildet. Vorstellbar sind auch andere Formen, wie z.B. oval, ellipsenförmig, dreieckig, viereckig, fünfeckig, sechseckig etc. Vorstellbar ist auch, dass mehr als ein Ablaufstutzen, z.B. zwei Ablaufstutzen, mit entsprechenden Öffnungen vorhanden ist bzw. sind. Die Öffnung 82 des Ablaufstutzens 80 befindet sich im Boden 10 der Ablaufeinrichtung 5.

Die Ablaufeinrichtung 5 kann spiegelsymmetrisch bezüglich einer Spiegelebene S1 ausgebildet sein, die durch den Mittelpunkt M der Öffnung 82 des Ablaufstutzens 80 und senkrecht zu den Verbindungswänden 25, 50 verläuft. Die in Fig. 4 gezeigte Ausführungsform ist bis auf die beiden mittleren Verbindungselemente 90 derart spiegelsymmetrisch ausgebildet.

Die Oberrandfläche 65 dient als Außenumfassung der Ablaufeinrichtung 5. Sie befindet sich in Fig. 4 somit sowohl links, rechts, als auch oben und unten. Eine Abstützfläche 40 befindet sich in Fig. 4 nur oben und unten, während an der rechten und linken Seite der Ablaufeinrichtung in Fig. 4 keine Abstützfläche 40 vorhanden ist. Vorstellbar ist jedoch auch, dass in diesem Bereich (d.h. an den kurzen Querseiten der Ablaufeinrichtung 5) ein Teil der Abstützfläche 40 vorhanden ist.

Das Abdeckungselement bzw. die Kontaktflächen des Abdeckungselements können komplementär zu der Abstützfläche 40 ausgebildet sein, so dass ein großflächiger Kontakt zwischen Abdeckungselement und Abstützfläche 40 vorhanden ist. Auch eine Berührung bzw. Kontaktierung zwischen Abdeckungselement und Abstützfläche 40 lediglich über einen dünnen linienförmigen Bereich ist vorstellbar. Das Abdeckungselement kann fest mit der Abstützfläche 40 verbunden sein bzw. integral mit der Abstützfläche 40 ausgebildet sein. Vorstellbar ist auch, dass das Abdeckungselement ein separates Element ist, das mit der Abstützfläche 40 bzw. der Ablaufeinrichtung 5 (lösbar) verbindbar ist, z.B. durch Anschrauben und/oder Ankleben.

In Fig. 5 ist besonders gut erkennbar, dass alle Oberflächen 10, 40, 65 der Ablaufeinrichtung 5, die zur Kontaktierung des Abwassers ausgebildet sind, in Richtung des Bodens 10 bzw. der Öffnung 82 des Ablaufstutzens 80 abfallend ausgebildet sind. Abfallend ausgebildet bedeutet, dass die jeweiligen Flächen einen Winkel zur Horizontalen aufweisen, der sich im Bereich von größer Null bis kleiner 90 Grad befindet.

Die Ablaufeinrichtung 5 ist zudem spiegelsymmetrisch zu einer weiteren Spiegelebene S2 ausgebildet, die senkrecht auf der Spiegelebene S1 steht. Die Spiegelebene S1 verläuft durch den Mittelpunkt M der Öffnung 82 des Ablaufstutzens 82 und steht senkrecht auf der Längsseite der Ablaufeinrichtung 5 (in Fig. 4 links bzw. rechts).

Die Ablaufeinrichtung 5 hat eine im Wesentlichen rechteckige Außenform. Andere (Außen-)Formen wie beispielsweise rund, oval, ellipsenförmig, kreisförmig, dreieckig, viereckig (nicht rechteckig), fünfeckig, sechseckig etc. sind vorstellbar.

Die Abstützfläche 40 kann insbesondere einen Winkel von ca. 50 Grad zur Horizontalen aufweisen. Im Gebrauch beträgt der Höhenunterschied zwischen den Oberflächen von verschiedenen Bereichen des Bodens 10 mindestens ca. 3 mm. Die Breite des Bodens 10 beträgt ca. 163 mm. Die Höhe der Ablaufeinrichtung 5 insgesamt beträgt ca. 50 mm. Der Abstand zwischen den oberen Kanten der gegenüberliegenden Abstützflächen 40 beträgt ca. 200 mm.

Die Verbindungskanten 18 zwischen den Bodenelementen 16, 16' des Bodens 10 sind in Fig. 4 (d.h. von oben betrachtet) jeweils senkrecht zueinander ausgerichtet.

Die Radien der verschiedenen Abrundungen der unterschiedlichen Ecken 12 bzw. Kanten 14, 35, 45, 60 können gleich groß sein. Vorstellbar ist jedoch auch, dass die Radien von verschiedenen Ecken 12 und Kanten 14, 35, 45, 60 bzw. der Ecken 12 im Vergleich zu den Kanten 14, 35, 45, 60 unterschiedlich groß sind.

### Bezugszeichenliste:

- 5: Ablaufeinrichtung
- 10: Boden
- 12: Ecken des Bodens
- 14: Außenkanten des Bodens
- 16, 16': Bodenelement
- 18: Verbindungskante zwischen Bodenelementen
- 25: Verbindungswand zwischen Boden und Abstützfläche
- 35: Außenkanten zwischen Abstützfläche und Verbindungswand zwischen Boden und Abstützfläche
- 40: Abstützfläche
- 45: Außenkanten zwischen Abstützfläche und Verbindungswand zwischen Abstützfläche und Oberrandfläche

- 50: Verbindungswand zwischen Abstützfläche und Oberrandfläche
- 60: Kante der Oberrandfläche
- 65: Oberrandfläche
- 80: Ablaufstutzen
- 82: (obere) Öffnung des Ablaufstutzens
- 90: Befestigungselemente
- 95: Höhenverstellelemente
- 96: Füße der Höhenverstellelemente
- M: Mittelpunkts (M) der Öffnung des Ablaufstutzens
- S1: Spiegelebene 1
- S2: Spiegelebene 2

## Patentansprüche

1. Ablaufeinrichtung (5) zum Abführen von Abwasser mit einer Oberrandfläche (65), die eine Außenumfassung der Ablaufeinrichtung (5) bildet,
einer Abstützfläche (40) zum Abstützen eines Abdeckungselements derart, dass dessen begehbare Oberfläche im Wesentlichen bündig mit der Oberrandfläche (65) verläuft, und
einem Boden (10) zum Auffangen und zum Weiterleiten von Abwasser in eine Öffnung (82) eines Ablaufstutzens (80) im Boden der Ablaufeinrichtung (5),
wobei zumindest ein Teil der Abstützfläche (40) derart in Richtung des Bodens (10) abfallend ausgebildet ist, dass im Gebrauch Abwasser, das auf die Abstützfläche (40) gelangt, in Richtung des Bodens (10) fließt, wobei die Oberrandfläche (65), die Abstützfläche (40) und der Boden (10) über im Gebrauch im Wesentlichen vertikal verlaufende Verbindungswände (25, 50) miteinander verbunden sind, wobei
der Boden (10) mehrere Bodenelemente (16, 16') aufweist, die in einem Winkel einander zu geneigt und in Richtung der Öffnung (82) des Ablaufstutzens (80) abfallend ausgebildet sind, wobei die Bodenelemente (16, 16') über Verbindungskanten (18) miteinander verbunden sind,
wobei die Verbindungskanten (18) zwischen den Bodenelementen (16, 16') des Bodens (10) von oben betrachtet jeweils senkrecht zueinander ausgerichtet sind.

2. Ablaufeinrichtung (5) nach Anspruch 1,
**dadurch gekennzeichnet, dass**
die Oberrandfläche (65) zumindest teilweise derart in Richtung des Bodens (10) abfallend ausgebildet ist, dass im Gebrauch Abwasser, das auf die Oberrandfläche (65) gelangt, in Richtung des Bodens (10) abfließt.

3. Ablaufeinrichtung (5) nach Anspruch 1 oder 2,
**dadurch gekennzeichnet, dass**
zumindest ein Teil der die Abstützfläche (40) begrenzenden Außenkanten (35, 45), insbesondere alle die Abstützfläche (40) begrenzenden Außenkanten (35, 45), abgerundet ausgebildet ist.

4. Ablaufeinrichtung (5) nach einem der vorhergehenden Ansprüche,
**dadurch gekennzeichnet, dass**
zumindest ein Teil der den Boden (10) begrenzenden Außenkanten (14), insbesondere alle den Boden (10) begrenzenden Außenkanten (14), abgerundet ausgebildet sind.

5. Ablaufeinrichtung (5) nach einem der vorhergehenden Ansprüche, **dadurch gekennzeichnet, dass** alle Flächen der Ablaufeinrichtung (5), die zur Kontaktierung des Abwassers vorgesehen sind, in Richtung der Öffnung (82) des Ablaufstutzens (80) abfallend ausgebildet sind.

6. Ablaufeinrichtung (5) nach einem der vorhergehenden Ansprüche, **dadurch gekennzeichnet, dass** der Boden (10) Verstärkungsbereiche aufweist, in denen der Boden (10) eine größere Dicke aufweist im Vergleich zu den Bereichen des Bodens (10) außerhalb der Verstärkungsbereiche.

7. Ablaufeinrichtung (5) nach Anspruch 6,
**dadurch gekennzeichnet, dass**
die Längsrichtungen der Verstärkungsbereiche im Wesentlichen in Richtung der Öffnung (82) des Ablaufstutzens (80) verlaufen.

8. Ablaufeinrichtung (5) nach einem der vorhergehenden Ansprüche,
**dadurch gekennzeichnet, dass**
die Ablaufeinrichtung (5) spiegelsymmetrisch bezüglich einer Spiegelebene (S1) ausgebildet ist, die durch den Mittelpunkt (M) der Öffnung (82) des Ablaufstutzens (80) und senkrecht zu den Verbindungswänden (25, 50) verläuft.

9. Ablaufeinrichtung (5) nach einem der vorhergehenden Ansprüche,
**dadurch gekennzeichnet, dass**
zumindest ein Teil der Ecken (12) des Bodens (10) abgerundet ausgebildet ist.

## Claims

1. Outlet device (5) for draining waste water, having an upper edge surface (65) forming an outer enclosure of the outlet device (5),
a supporting surface (40) for supporting a cover element such that its walkable surface is substantially flush with the upper edge surface (65), and a bottom (10) for collecting and directing waste water into an opening (82) of a drain pipe (80) in the bottom of the outlet device (5),
wherein at least part of the supporting surface (40) is designed to slope down towards the bottom (10) in such a way that, in use, waste water that reaches the supporting surface (40) flows towards the bottom (10), wherein the upper edge surface (65), the supporting surface (40) and the bottom (10) are connected to one another by connecting walls (25, 50) that extend essentially vertically in use, wherein
the bottom (10) has a plurality of bottom elements (16, 16') that are inclined at an angle to one another and slope down towards the opening (82) of the drain pipe (80), wherein the bottom elements (16, 16') are connected to one another via connecting edges (18), wherein the connecting edges (18) between the bottom elements (16, 16') of the bottom (10) are each aligned perpendicular to one another when viewed from above.

2. Outlet device (5) according to claim 1,
**characterized in that**
the upper edge surface (65) is designed such that it slopes down at least in part in the direction of the bottom (10) such that, in use, waste water that reaches the upper edge surface (65) flows off in the direction of the bottom (10).

3. Outlet device (5) according to claim 1 or 2,
**characterized in that**
at least some of the outer edges (35, 45) defining the supporting surface (40), in particular all the outer edges (35, 45) defining the supporting surface (40), are rounded.

4. Outlet device (5) according to one of the preceding claims,
**characterized in that**
at least some of the outer edges (14) defining the bottom (10), in particular all the outer edges (14) defining the bottom (10), are rounded.

5. Outlet device (5) according to one of the preceding claims,
**characterized in that**
all the surfaces of the outlet device (5) which are intended to make contact with the waste water are designed such that they slope downwards in the direction of the opening (82) of the drain pipe (80).

6. Outlet device (5) according to one of the preceding claims,
**characterized in that**
the bottom (10) has reinforcing regions in which the bottom (10) has a greater thickness compared to the regions of the bottom (10) outside the reinforcing regions.

7. Outlet device (5) according to claim 6,
**characterized in that**
the longitudinal directions of the reinforcing regions run substantially in the direction of the opening (82) of the drain pipe (80).

8. Outlet device (5) according to one of the preceding claims,
**characterized in that**
the outlet device (5) is designed to be mirror-symmetrical with respect to a mirror plane (S1) which runs through the center point (M) of the opening (82) of the drain pipe (80) and perpendicular to the connecting walls (25, 50).

9. Outlet device (5) according to one of the preceding claims,
**characterized in that**
at least some of the corners (12) of the bottom (10) are rounded.

## Revendications

1. Installation d'évacuation (5) pour l'évacuation d'eaux usées, avec une surface de bord supérieur (65) qui forme une circonférence extérieure de l'installation d'évacuation (5), une surface d'appui (40) destinée à soutenir un élément de couverture de telle manière que la surface praticable de celui-ci soit sensiblement en affleurement avec la surface de bord supérieur (65) et un fond (10) pour recueillir des eaux usées et les acheminer dans une ouverture (82) d'un raccord d'évacuation (80) dans le fond de l'installation d'évacuation (5), dans laquelle au moins une partie de la surface d'appui (40) est en pente en direction du fond (10) de telle sorte que, pendant l'utilisation, les eaux usées qui parviennent sur la surface d'appui (40) s'écoulent en direction du fond (10), dans laquelle la surface de bord supérieur (65), la surface d'appui (40) et le fond (10) sont reliés entre eux par des parois de liaison (25, 50) qui sont sensiblement verticales pendant l'utilisation, dans laquelle le fond (10) présente plusieurs éléments de fond (16, 16') inclinés les uns par rapport aux autres selon un angle et en pente vers l'ouverture (82) du raccord d'évacuation (80), lesquels éléments de fond (16, 16') sont reliés entre eux par des arêtes de liaison (18), les arêtes de liaison (18) entre les éléments de fond (16, 16') du fond (10) étant respectivement orientées perpendiculairement les unes aux autres en vue de dessus.

2. Installation d'évacuation (5) selon la revendication 1, **caractérisée en ce que** la surface de bord supérieur (65) est au moins en partie en pente en direction du fond (10) de telle manière que, pendant l'utilisation, les eaux usées qui parviennent sur la surface de bord supérieur (65) s'écoulent en direction du fond (10).

3. Installation d'évacuation (5) selon la revendication 1 ou 2, **caractérisée en ce qu'**une partie au moins des arêtes extérieures (35, 45) délimitant la surface d'appui (40), en particulier toutes les arêtes extérieures (35, 45) délimitant la surface d'appui (40), sont arrondies.

4. Installation d'évacuation (5) selon l'une des revendications précédentes, **caractérisée en ce qu'**une partie au moins des arêtes extérieures (14) délimitant le fond (10), en particulier toutes les arêtes extérieures (14) délimitant le fond (10), sont arrondies.

5. Installation d'évacuation (5) selon l'une des revendications précédentes, **caractérisée en ce que** toutes les surfaces de l'installation d'évacuation (5) prévues pour venir en contact avec les eaux usées sont en pente en direction de l'ouverture (82) du raccord d'évacuation (80).

6. Installation d'évacuation (5) selon l'une des revendications précédentes, **caractérisée en ce que** le fond (10) présente des zones renforcées dans lesquelles le fond (10) a une plus grande épaisseur que dans les zones du fond (10) situées en dehors des zones renforcées.

7. Installation d'évacuation (5) selon la revendication 6, **caractérisée en ce que** les directions longitudinales des zones renforcées sont orientées sensiblement vers l'ouverture (82) du raccord d'évacuation (80).

8. Installation d'évacuation (5) selon l'une des revendications précédentes, **caractérisée en ce que** l'installation d'évacuation (5) a une construction symétrique en miroir par rapport à un plan de symétrie (S1) qui passe par le centre (M) de l'ouverture (82) du raccord d'évacuation (80) et perpendiculairement aux parois de liaison (25, 50).

9. Installation d'évacuation (5) selon l'une des revendications précédentes, **caractérisée en ce qu'**une partie au moins des angles (12) du fond (10) sont arrondies.
